**Europäisches Patentamt**

**European Patent Office**

**Office européen des brevets**

(19)

(11) Publication number : **0 135 253 B2**

(12)

# NEW EUROPEAN PATENT SPECIFICATION

(45) Date of publication of the new patent specification : **21.04.93 Bulletin 93/16**

(51) Int. Cl.⁵ : **C08L 23/06**

(21) Application number : **84304023.9**

(22) Date of filing : **14.06.84**

(54) Process for producing an ultrahigh-molecular-weight polyethylene composition.

The file contains technical information submitted after the application was filed and not included in this specification

(30) Priority : **16.06.83 JP 106637/83**
**28.05.84 JP 106636/84**

(43) Date of publication of application :
**27.03.85 Bulletin 85/13**

(45) Publication of the grant of the patent :
**02.12.87 Bulletin 87/49**

(45) Mention of the opposition decision :
**21.04.93 Bulletin 93/16**

(84) Designated Contracting States :
**DE FR GB NL**

(56) References cited :
**EP-A- 0 115 192**
**DE-A- 3 213 948**
**FR-A- 2 448 587**
**GB-A- 2 042 414**
**GB-A- 2 051 667**
**GB-A- 2 072 197**
**LU-A- 48 119**
**US-A- 3 048 465**
**US-A- 3 219 728**
**US-A- 3 547 819**
**US-A- 4 076 681**
**US-A- 4 130 618**
**US-A- 4 170 586**
**US-A- 4 289 679**
**P.J. Plory "principles of Polymer Chemistry"**
**Cornell University Press, Ithaca, New York**
**1953**
**Journal of Polymer Science; Polymer Physics**
**Edition, Vol. 11, pp. 15-24, 1973**
**Journal of Polymer Science, Part A2, Vol. 5,**
**1967, pp. 47-61**
**P. Smith "Eutectic solidification of polymer**
**solutions", Dissertation, University of Groni-**
**ngen, 1976**
**Journal of Polymer Science, Part A2, Vol. 7, pp.**
**2029-2044, 1969**
**Macromolecules, vol. 4, no. 3, May-June 1971,**
**pp. 356-359**
**Hercules "Technical Report 1900", 1978**
**ASTM Designation D4020-81**

(56) References cited :
**Journal of Polymer Science, Polymer Physics**
**Edition, Vol. 19, pp 877-888 (1981)**

(73) Proprietor : **AGENCY OF INDUSTRIAL**
**SCIENCE AND TECHNOLOGY**
**3-1, 1-chome, Kasumigaseki**
**Chiyoda-ku Tokyo (JP)**
Proprietor : **MITSUI PETROCHEMICAL**
**INDUSTRIES, LTD.**
**2-5, Kasumigaseki 3-chome Chiyoda-ku**
**Tokyo 100 (JP)**

(72) Inventor : **Iguchi, Masatoshi**
**3-654, Namiki Sakura-mura**
**Niihari-gun Ibaraki-ken (JP)**
Inventor : **Mitsuhashi, Shigenobu**
**2-709-312, Azuma Sakura-mura**
**Niihari-gun Ibaraki-ken (JP)**
Inventor : **Ohno, Takao**
**1-2-5, Misono**
**Ohtake-shi Hiroshima-ken (JP)**

(74) Representative : **Myerscough, Philip Boyd et al**
**J.A.Kemp & Co. 14, South Square Gray's Inn**
**London, WC1R 5EU (GB)**

EP 0 135 253 B2

## Description

This invention relates to a process for producing an ultrahigh-molecular-weight ethylene polymer or copolymer resin composition composed of (A) an ultrahigh-molecular-weight ethylene polymer or copolymer resin and (B) an organic solvent capable of dissolving the resin (A); characterized in that

(1) the resin composition is in the homogeneous state,

(2) the resin composition comprises

(A) more than 10% by weight to 75% by weight, based on the total weight of (A) and (B) of a ultrahigh-molecular-weight ethylene polymer or copolymer resin having an intrinsic viscosity [η], determined at 135°C in decalin, of at least 5 dl/g, and

(B) less than 90% by weight to 25% by weight, based on the total weight of (A) and (B), of an organic solvent capable of dissolving the resin (A), and

(3) the resin composition has a melt flow rate, MFR, determined by ASTM D1238 at 160°C under a load of 20 kg, of 1,000 to 0.001 g/10 min., a single DSC endothermic peak, and a DSC melting point, Tm (°C), determined by ASTM D3418, within a range specified by the following formulae (1) and (2)

$$Tm = Tmo - a(1 - x) \quad (1)$$
$$25 \leqq a \leqq 45 \quad (2)$$

wherein Tmo is the DSC melting point (°C) determined by ASTM D3418 of the resin (A), and x is the weight fraction of the resin (A) based on the total weight of (A) and (B), which process comprises

(1) subjecting a mixture of more than 10% by weight to 75% by weight of the resin (A) and less than 90% by weight to 25% by weight of the organic solvent (B), based on the total weight of (A) and (B), to a swelling treatment at a temperature ranging from the lowest swelling temperature (°C) to less than the DSC melting point (°C) determined by ASTM D3418, of the resin (A) until swelling is terminated, and

(2) heat-treating the swollen mixture at a temperature equal to, or higher than, the DSC melting point, determined by ASTM D3418 of the mixture.

The composition produced by this process has excellent moldability, and shows a homogeneous state in spite of the relatively high content of the ultrahigh-molecular-weight ethylene polymer or copolymer. The invention also relates to a crystalline solid of a ultrahigh-molecular-weight ethylene polymer or copolymer resin which can be obtained by removing the solvent from the resin composition produced by the process.

The crystalline solid of a ultrahigh-molecular-weight polymer or copolymer resin which can be obtained by removing the solvent from the resin composition is composed of an ethylene polymer or copolymer resin having an intrinsic viscosity [η], determined at 135°C in decalin, of at least 5 dl/g and having a lamellar micro-crystalline structure with a thickness, determined by a small-angle X-ray scattering method, of 120 to 250 x 10⁻¹⁰m (Å) and a crystallinity, determined by an X-ray diffraction method, of at least 60%.

Like conventional, widely used ethylene polymer or copolymer resins, the ultrahigh-molecular-weight polymer or copolymer resins are polymeric materials having methylene units as the sole or main recurring units. Since they have much higher average molecular weights than the conventional ethylene polymer or copolymer resins, they encounter molding troubles which are very much different from those which the conventional ethylene resins experience.

The ultrahigh-molecular-weight ethylene polymer or copolymer resins (to be sometimes referred to generically as ultrahigh-molecular-weight polyethylene) have excellent impact strength, abrasion resistance and chemical resistance because of their very high average molecular weight, and are finding increasing use as engineering plastics. It has recently been found that the ultrahigh-molecular-weight polyethylene can exhibit outstanding dynamical properties when molecularly oriented to a high degree. It is expected therefore to be useful for making new materials having high performance.

Its extremely high average molecular weight, however, leads to the difficulty that it cannot virtually be molded into articles by conventional techniques used for conventional polyethylene resins because despite its being a thermoplastic polymer, it has an extremely high melt viscosity and an extremely low solubility in solvent. Accordingly, the utilization of the ultrahigh-molecular-weight polyethylene is greatly restricted, and this has been a new technical problem to be solved.

The ultrahigh-molecular-weight polyethylene can be produced, for example, by the polymerization of ethylene or ethylene and an alpha-olefin having at least 3 carbon atoms in the presence of a highly active Ziegler-type catalyst, and generally obtained as semicrystalline white particles having a particle diameter of about 100 μm. When it is heated, it loses crystallinity and becomes semi-transparent at a specific temperature (melting point, usually about 135°C) as is the case with ordinary thermoplastic polymers, but scarcely shows flowability. The melt-molding method based on screw extrusion which is applicable commonly to thermoplastic polymers cannot be applied in practice to the ultrahigh-molecular-weight polyethylene. For this reason, the molding of the ultrahigh-molecular-weight polyethylene has been carried out exclusively by a powder molding method which is disadvantageous in regard to equipment and operationally inefficient. Furthermore, the application of means of imparting molecular orientation to molded articles by utilizing the flowability of the melt as in the production of films of general thermoplastic resins is very unrealistic in the case of the ultrahigh-molecular-weight polyethylene.

A method of molding the ultrahigh-molecular-weight polyethylene comprising using its solution has recently attracted attention although this is not a technique intended to overcome the molding difficulty of the ultrahigh-molecular-weight polyethylene, The new materials of high performance mentioned hereinabove are expected to be obtained by using this method.

When the molecular structure of polyethylene is considered, it takes a planar zigzag structure of successive methylene units in the crystals, and the cross-sectional area occupied by the main chain is relatively small. It had long been predicted from this fact that polyethylene would have a theoretical modulus of 300 gpa or more. However, it was experimentally verified only in the late 1970s when A. J. Pennings et al. of Netherlands devised a method of taking out a continuous filament from a dilute solution of ultrahigh-molecular-weight polyethylene in a rotating double cylinder and found that the resulting filament had excellent mechanical properties (a modulus on the order of 100 gpa) based on its highly oriented structure. Pennings et al. ascribed the formation of such an oriented structure to the consecutive crystallization of the polyethylene filament on the surface of the rotating cylinder.

British Patent No. 1,554,124 granted to Stamicarbon B. V. with A. J. Pennings et al. named as inventors proposed a process for the preparation of a filamentous polymer crystal from a solution of a crystallizable polymer, by growing a seed crystal longitudinally in a flowing solution of the polymer and removing the growing polymer filament from the solution of the polymer at an average rate which is equal to the growth rate, this process being characterized in that the longitudinal growth takes place in contact with a surface which is moving in the direction of growth of the crystal, the length of the contact between the filamentous crystal and the said surface being at least 15 cm, measured from the tip at which growth takes place. The British Patent states that a 0.5% solution is well suitable and for practical reasons, the use of unduly high concentrations will be avoided. For example, in Example 1 of the British Patent, a 0.5% p-xylene solution of polyethylene having an intrinsic viscosity $[\eta]$, determined at 135°C in decalin, of 15 dl/g is used, and in Example 2, a 1% p-xylene solution of the above polyethylene is used.

Smith et al. pointed out that a gel of polyethylene obtained by rapidly cooling a dilute solution of ultrahigh-molecular-weight polyethylene in cold water below room temperature can be super-stretched at a temperature of, for example, about 80°C to the melting point of the polyethylene, the stretched product can exhibit similar mechanical properties, and the density of entanglement among the molecules of the gel-like polyethylene is low (note: the super-stretching is defined as deformation at a stretch ratio of at least 16 in one direction by Prof. Ian M. Ward of University of Leeds, England) [Paul Smith, Piet J. Lemstra: Journal of Materials Science, 505-514, 15 (1980); Paul Smith, Piet J. Lemstra: Journal of Polymer Science, Polymer Physics Edition, 19, 1007-1009 (1981)]. Smith et al. examined polymer concentrations of up to 2% by weight, and showed that as the polymer solution was more dilute, better results were obtained in regard to the stretchability of the gel [Paul Smith, Piet J. Lemstra and Henk C. Booij: Journal of Polymer Science, Physics Edition, 19, 877-888 (1981)]. In Japanese Laid-Open Patent Publication No. 15408/1981 (corresponding to GB 2051667A), Smith et al. proposed "filaments having high modulus and tensile strength from high-molecular-weight polyethylene and a process for production thereof". In this proposal, high-molecular-weight polyethylene is dissolved in a solvent at 145°C, and a range of 1 to 50% by weight is claimed as the polymer concentration of the resulting polyethylene solution. The patent document fails to give any specific description of the method of dissolution. The maximum concentration of polymers within the category of ultrahigh-molecular-weight polyethylene, which is given in this patent document, is only 8% by weight in Example 8 in which the weight average molecular weight is 600,000.

The moldability of a gel-like solid of ultrahigh-molecular-weight polyethylene was later investigated from the viewpoint of industrial technology in addition to the academic study. Such later works have been directed to concentrations of as low as less than several percent for gel formation, and none have basically outweighed the achievements of Smith et al.

A method of molding a polymeric material in the presence of a solvent is by no means a new one, and has been favorably employed since the infant stage of polymer science, namely since before 1930 when the subject of study was mainly regenerated cellulose. It is common knowledge that the polymer concentration of the solution is an important factor in relation to the moldability of the polymer and the efficiency of production in this method.

With regard to ultrahigh-molecular-weight polyethylene, however, solutions having a relatively low concentration of less than several percent or regenerated solids obtained therefrom have been the sole subject of study (see, for example, British Laid-Open Patent Applications Nos, 2,051,667A and 2,042,414A). The rea-

EP 0 135 253 B2

son for this is that because of its superhigh molecular weight, the ultrahigh-molecular-weight polyethylene is difficultly soluble and no reliable and practical method of preparing a high concentration solution has been available, and naturally, the properties of such a high concentration solution or a solid derived from it have been totally unknown. In fact, when a solvent is added to a relatively large amount of a powdery polyethylene of superhigh molecular weight in a customary manner, only fish eyes form owing to the solvation of only the surfaces of the particles and only a heterogeneous composition is obtained. A homogeneous composition of high concentration composed of ultrahigh-molecular-weight polyethylene and a solvent cannot be obtained by this ordinary method.

Some attempts have in fact been made to obtain a solution of ultrahigh-molecular-weight polyethylene in relatively high concentrations, but have been unsuccessful in practice in obtaining a high concentration solution of ultrahigh-molecular-weight polyethylene retaining its own properties. For example, a method of concentrating a dilute solution of ultrahigh-molecular-weight polyethylene was found to be impracticable because it involves complex operations and a risk of denaturation of the polymer in the concentration step. A method comprising applying ultrasonic irradiation during the heating of the starting polymer and a solvent cannot give a solution of the polymer retaining its superhigh molecular weight because the action of ultrasonic waves inevitably results in cleavage of the molecular chains, that is, in a reduction in the molecular weight of the polymer.

Some of the co-inventors of the present invention proposed the preparation of a molding dope containing ultrahigh-molecular-weight polyethylene in a relatively high concentration (Japanese Laid-Open Patent Publication No. 78238/1984 laid-open on May 7, 1984 which was after the fist priority date, June 16, 1983, of the present application). This prior application proposed a process for preparing a molding dope for high-molecular-weight polyethylene by using high-molecular-weight polyethylene having a weight average molecular weight of at least $8 \times 10^5$ as a material and an organic solvent capable of dissolving polyethylene at high temperatures, which comprises first subjecting polyethylene to a wetting treatment with a sufficient amount of the solvent to wet polyethylene at a temperature at which the solvent does not swell the polyethylene, and thereafter stirring the wet polyethylene while pouring the solvent heated at 150 to 160°C, or adding the wet polyethylene with stirring to the solvent heated to the aforesaid temperature, thereby dissolving the polyethylene uniformly.

This patent document states that the proper concentration of polyethylene having a weight average molecular weight of at least $8 \times 10^5$ (corresponding to an intrinsic viscosity of about 7.2 dl/g determined at 135°C in decalin) is up to about 20% by weight, and with polyethylene having a weight average molecular weight of $3 \times 10^6$ (corresponding to an intrinsic viscosity, determined at 135°C in decalin, of about 19 dl/g), about 10% by weight is the limit of its concentration. In all of the working examples of this patent document, ultrahigh-molecular-weight polyethylene having a weight average molecular weight of $1.9 \times 10^6$ (corresponding to an intrinsic viscosity, determined at 135°C in decalin, of about 13.5 dl/g) is used, and room temperature is employed as the wetting treatment temperature at which the solvent does not swell the polyethylene. The highest dope concentration in all of the working examples is 10% by weight.

Thus, this prior application refers to polymer concentrations of up to about 20% by weight, but specifically discloses only the formation of a ultrahigh-molecular-weight polyethylene composition having a concentration of 10% by weight at the highest. Furthermore, it describes only room temperature as the temperature at which the solvent does not swell the polyethylene. It is difficult in practice to obtain a ultrahigh-molecular-weight polyethylene composition in the homogeneous state having a concentration of more than 10% by weight by wetting treatment at room temperature which is specifically disclosed there, and the patent document does not specifically show the formation of such a high concentration composition.

The present inventors made investigations in order to provide a process for producing a ultrahigh-molecular-weight polyethylene composition being in the homogeneous state and having a higher concentration.

These investigations have led to the discovery that a ultrahigh-molecular-weight polyethylene composition having excellent moldability, and exhibiting a homogeneous state despite its relatively high content of the polyethylene, can be obtained by a process characterized by a combination of parameters, that is, the swelling treatment of a mixture of ultrahigh-molecular weight polyethylene and an organic solvent capable of dissolving the polyethylene at a temperature ranging from the lowest swelling temperature to be described to less than the DSC melting point of the polyethylene, and the heat-treatment of the resulting swollen mixture at a temperature above the DSC melting point of the mixture.

Thus, the present inventors' investigations have shown that a composition which has excellent moldability and exhibits a homogeneous state despite its including the ultrahigh-molecular-weight polyethylene in a relatively high concentration can be obtained by a process which comprises

(1) subjecting a mixture of (A) more than 10% by weight, preferably more than 20% by weight, to 75% by weight, based on the total weight of (A) and (B), of a ultrahigh-molecular-weight ethylene polymer or copolymer resin having an intrinsic viscosity [η], determine at 135°C in decalin, of at least 5 dl/g and (B) less than 90% by weight, preferably less than 80% by weight, to 25% by weight, based on the total weight of (A) and (B), of an organic solvent capable of dissolving the resin (A) to a swelling treatment at a temperature ranging from its lowest swelling temperature (°C) to less than the DSC melting point (°C), determined by ASTM D3418, of the resin (A) until swelling is terminated, and

(2) heat-treating the swollen mixture at a temperature equal to, or higher than, the DSC melting point, determined by ASTM D3418, of the mixture.

It has also been found that a similar composition can be obtained by the following improved process which is not specifically disclosed in the above-cited prior application, the improved process comprising

(1') subjecting a mixture of (A) a ultrahigh-molecular-weight ethylene polymer or copolymer resin having an intrinsic viscosity [$\eta$], determined at 135°C in decalin, of at least 5 dl/g to a wetting treatment with (B) an organic solvent capable of dissolving the resin (A), the amount of the organic solvent being sufficient to form a slurry of the resin (A), preferably at least equal to the weight of the resin (A), at a temperature of 70°C to less than the lowest swelling temperature (°C) of the mixture, and

(2') hot-mixing the resulting mixture with a fresh supply of the organic solvent (B) at a temperature of at least 130°C, thereby to give a mixture composed of more than 10% by weight, preferably more than 20% by weight, to 75% by weight, based on the total weight of (A) and (B), of the resin (A) and less than 90% by weight, preferably less than 80% by weight, to 25% by weight, based on the total weight of (A) and (B), of the solvent (B).

It has also been found as a result of the present inventors' investigations that among ultra-high-molecular-weight polyethylene compositions which can be obtained by the process comprising steps (1) and (2) or the process comprising steps (1') and (2'), the following composition usually shows a semi-solid state or solid state at room temperature and excellent moldability.

A ultrahigh-molecular-weight ethylene polymer or copolymer resin composition composed of (A) more than 10% by weight, preferably more than 20% by weight, to 75% by weight, based on the total weight of (A) and (B), of a ultrahigh-molecular-weight ethylene polymer or copolymer resin having an intrinsic viscosity [$\eta$], determined at 135°C in decalin, of at least 5 dl/g, and (B) less than 90% by weight, preferably less than 80% by weight, to 25% by weight, based on the total weight of (A) and (B), of an organic solvent capable of dissolving the resin (A); is characterized in that

(i) the composition is in the homogeneous state,

(ii) the composition has a melt flow rate, MFR, determined by ASTM D1238 at 160°C under a load of 20 kg, of 1,000 to 0.001 g/10 min.,

(iii) the resin composition shows a single DSC endothermic peak as determined by ASTM D3418, and (iv) the resin composition shows a DSC melting point Tm (°C), determined by ASTM D3418, within a range specified by the following formulae (1) and (2)

$$Tm = Tmo - a(1 - x) \quad (1)$$
$$25 \leqq a \leqq 45 \quad (2)$$

wherein Tmo is the DSC melting point (°C) determined by ASTM D3417 of the resin (A), and x is the weight fraction of the resin (A) based on the total weight of (A) and (B).

It has also been found in accordance with this invention that by subjecting the above composition to a treatment of removing the solvent, the following crystalline solid not described in the known literature can be obtained, and that the crystalline solid shows excellent stretchability.

A crystalline solid of a ultrahigh-molecular-weight ethylene polymer or copolymer resin composed of an ethylene polymer or copolymer resin having an intrinsic viscosity [$\eta$], determined at 135°C in decalin, of at least 5 dl/g and having a lamellar microcrystalline structure with a thickness, determined by a small-angle X-ray scattering method, of 120 to 250 x 10$^{-10}$m (Å) and a crystallinity, determined by an X-ray diffraction method, of at least 60%.

An object of this invention is to provide processes for the production of the aforesaid composition and crystalline solid.

The above and other objects and advantages of this invention will become more apparent from the following description.

The ultrahigh-molecular-weight polyethylene (A) as used in the composition denotes high-molecular-weight polyethylene having an intrinsic viscosity [$\eta$], determined at 135°C in decalin, of at least 5 dl/g, preferably at least 7 dl/g, for example 7 to 30 dl/g. Polyethylene having an intrinsic viscosity of less than 5 dl/g is easy to dissolve. But when an article molded from the resulting composition, such as a filament, is stretched, it is difficult to obtain a stretched article having excellent tensile strength. Furthermore, the resulting composition has a high melt flow rate and poor moldability. There is no particular upper limit to the intrinsic viscosity of polyethylene. But when it exceeds 30 dl/g, the amount of the ultrahigh-molecular weight polyethylene (A) should be extremely decreased in order to obtain a composition having excellent moldability with an MFR of at least 0.001 g/10 min., and there is little practical advantage.

In the present invention, the ultrahigh-molecular-weight polyethylene (A) denotes not only a homopolymer of ethylene but also copolymers of a major proportion of ethylene and a minor proportion of an alpha-olefin having 3 to 18 carbon atoms, such as propylene, 1-butene, 4-methyl-1-pentene, and 1-hexene. Such ultrahigh-molecular-weight polyethylenes have especially high molecular weights among ethylene polymer or copolymer resins obtained by polymerizing ethylene or ethylene with alpha-olefins in the presence of so-called Ziegler catalysts. Methods for their product are known *per se*, and such polyethylenes are also commercially available.

The organic solvent (B) capable of dissolving the resin (A) is preferably a solvent having a boiling point equal to, or higher than, the melting point of the resin (A), preferably at least 20°C higher than the melting points of the resin (A).

Examples of the organic solvent (B) include aliphatic hydrocarbons such as n-nonane, n-decane, n-undecane, n-dodecane, n-tetradecane, n-octadecane, liquid paraffins and kerosene; aromatic hydrocarbons or their hydrogenated derivatives, such as xylene, naphthalene, tetralin, butylbenzene, p-cymene, cyclohexylbenzene, diethylbenzene, pentylbenzene, dodecylbenzene, bicyclohexyldecalin, methylnaphthalene and ethylnaphthalene; halogenated hydrocarbons such as 1,1,2,2-tetrachloroethane, pentachloroethane, hexachloroethane, 1,2,3-trichloropropane, dichlorobenzene, 1,2,4-trichlorobenzene and bromobenzene; and mineral oils such as paraffinic process oils, naphthenic process oils and aromatic process oils.

In the ultrahigh-molecular-weight polyethylene composition, the amount of the ultrahigh-molecular-weight polyethylene (A) is more than 10% by weight, and the amount of the organic solvent (B) is less than 90% by weight to 25% by weight, both based on the total weight of (A) and (B). Preferably, the composition is composed of more than 20% by weight to 75% by weight of (A) and less than 80% by weight to 25% by weight of (B). More preferably, it is composed of more than 20% by weight to 60% by weight of (A) and less than 80% by weight to 40% by weight of (B).

If the amount of the ultrahigh-molecular-weight polyethylene (A) is not more than 10% by weight, the amount of the solvent (B) increases, and the process is of low industrial value. On the other hand, if it exceeds 75% by weight, a composition having an MFR of at least 0.001 g/10 min. cannot be substantially obtained, and the resulting composition has poor moldability.

The ultrahigh-molecular-weight polyethylene composition has the following characteristics (i) to (iv).

(i) It is in the homogeneous state.

(ii) It has an MFR of 1,000 to 0.001 g/10 min., preferably 300 to 0.001 g/10 min., more preferably 100 to 0.001 g/10 min. Compositions having an MFR exceeding 1000 g/10 min. and below 0.001 g/10 min. have poor moldability.

(iii) It shows a single DSC endothermic peak.

(iv) It shows a DSC melting point Tm (°C) [the temperature at which the single DSC endothermic peak in (iii) appears] within a range specified by the following formulae (1) and (2), preferably formulae (1) and (2-1).

$$Tm = Tmo - a(1 - x) \quad (1)$$
$$25 \leqq a \leqq 45 \quad (2)$$

preferably

$$30 \leqq a \leqq 40 \quad (2 - 1)$$

The fact that the ultrahigh-molecular-weight polyethylene composition has a single DSC endothermic peak and a Tm within the range specified by formulae (1) and (2) represents the homogeneity of the composition. Compositions having a plurality of DSC endothermic peaks and a Tm outside the range defined by formulae (1) and (2) are heterogeneous, and when such compositions are extruded into a filament or film form, uniform extrudates are difficult to obtain. Furthermore, the stretchability of the extrudates is poor.

The ultrahigh-molecular-weight polyethylene composition has homogeneity on a molecular level, and the method of its preparation is not particularly restricted so long as the composition has the aforesaid characteristics (i) to (iv).

Since, however, no process for actually preparing such a composition has been disclosed in the past, some embodiments of preparation methods discovered by the present inventors will be described below.

According to one embodiment, it can be prepared by a process which comprises

(1) subjecting a mixture of (A) more than 10% by weight, preferably more than 20% by weight, to 75% by weight, based on the total weight of (A) and (B), of a ultrahigh-molecular-weight ethylene polymer or copolymer resin having an intrinsic viscosity [η], determined at 135°C in decalin, of at least 5 dl/g and (B) less than 90% by weight, preferably less than 80% by weight, to 25% by weight, based on the total weight of (A) and (B), of an organic solvent capable of dissolving the resin (A) to a swelling treatment at a temperature ranging from its lowest swelling temperature (°C) to less than the DSC melting point (°C), determined by ASTM D3418, of the resin (A), and

(2) heat-treating the swollen mixture at a temperature equal to, or higher than, the DSC melting point, determined by ASTM D3418, of the mixture.

According to another embodiment, it can be produced by a process which comprises

(1') subjecting a mixture of (A) a ultrahigh-molecular-weight ethylene polymer or copolymer resin having an intrinsic viscosity [η], determined at 135°C in decalin, of at least 5 dl/g to a wetting treatment with (B) an organic solvent capable of dissolving the resin (A), the amount of the organic solvent being sufficient to form a slurry of the resin (A), preferably at least equal to the weight of the resin (A), at a temperature of 70°C to less than the lowest swelling temperature (°C) of the mixture, and

(2') hot-mixing the resulting mixture with a fresh supply of the organic solvent (B) at a temperature of at least 130°C, thereby to give a mixture composed of more than 10% by weight, preferably more than 20% by weight, to 75% by weight, based on the total weight of (A) and (B), of the resin (A) and less than 90% by weight, preferably less than 20% by weight, to 25% by weight, based on the total weight of (A) and (B), of the solvent (B).

In the first embodiment, the mixture composed of the ultrahigh-molecular-weight polyethylene (A) and the organic solvent (B) is subjected to a swelling treatment at a temperature ranging from the lowest swelling temperature (°C) of the mixture to less than the DSC melting point (°C) of (A).

The lowest swelling temperature (°C), as used herein, denotes the temperature measured and determined by the following procedure.

Six samples Nos. 1 to 6 were prepared by mixing 10 g of the ultrahigh-molecular-weight polyethylene (A) and 100 ml of the organic solvent (B). These samples were each subjected to a swelling treatment with stirring for 15 minutes at a temperature of 80°C (for No. 1), 90°C (for No. 2), 100°C (for No. 3), 110°C (for No. 4), 120°C (for No. 5), and 130°C (for No. 6). Each of the samples was then allowed to cool to room temperature, and then subjected to solid-liquid separation by decantation. The weight (W gr) of the solid was measured. Based on the weights of the solids obtained from these samples, the percent content of the solvent of each of the solids was calculated in accordance with the following equation.

$$S(\%) = [\,(W\ -\ 10)/W]\ x\ 100$$

Then, as shown in Figure 1, the relation between S (%) and the treatment temperature (°C) was plotted in a graph, and the temperature corresponding to an S of 70 was read, and defined as the lowest swelling temperature.

After the mixture is subjected to the above swelling treatment, the resulting swollen mixture is heat-treated at a temperature above the DSC melting point, determined by ASTM D3418, of the swollen mixture. There is no upper limit to the heat-treatment temperature unless the decomposition of the ultrahigh-molecular-weight polyethylene (A) occurs. For example, the upper limit is usually the boiling point of the solvent or about 280°C.

The termination of the swelling of the ultrahigh-molecular-weight polyethylene (A) can usually be judged by visual observation since the form of the mixture of the polyethylene (A) and the solvent (B) greatly varies once the powder or particles of the polyethylene (A) have been swollen. The variation of the form showing the termination of swelling slightly differs depending upon the concentration of the polymer in the solvent (B). For example, when the concentration is about 5 to 20% by weight, the entire mixture changes to a porridge-like state and abruptly increases in viscosity. When the concentration exceeds 20% by weight, almost all of the solvent is included in the powder or particles of the ultrahigh-molecular-weight polyethylene (A) and the mixture changes to the form of scrambled egg. The time required until the termination of swelling slightly differs depending upon the type of the solvent (B). For example, the desired swelling can be carried out at a temperature ranging from the lowest swelling temperature to less than the DSC melting point of the ultrahigh-molecular-weight polyethylene for a period of at least about 5 minutes, preferably for at least about 10 minutes. In practice, a uniform solution can be formed by controlling the temperature of the mixture of the ultrahigh-molecular-weight polyethylene (A) and the solvent (B) without periodically observing the state of the mixture. It is not always necessary therefore to build a mixing tank or the like from glass or provide a viewing window on it, and various mixing tanks made of such materials as metal and ceramics can be used.

After the swelling treatment of the ultrahigh-molecular-weight polyethylene (A) is over, the swollen mixture is heat-treated at a temperature above the DSC melting point (determined by ASTM D3418) of the swollen mixture. For example, stirring the mixture under heat can give a uniform solution. The heat-treatment temperature after the swelling treatment is the melting point of the ultrahigh-molecular-weight polyethylene (A) or higher. However, since the swelling of the polyethylene with the solvent (B) results in a fall in melting point, it is sufficient in practice to heat the mixture to a temperature equal to, or higher than, the DSC melting point of the mixture of the ultrahigh-molecular-weight polyethylene and the solvent.

If the swelling treatment is omitted or the mixture of (A) and (B) is heated to a temperature above the melting point of the polyethylene (A) before the polyethylene (A) is swollen sufficiently, an undissolved portion occurs in the mixture. Since the undissolved portion once formed does not disappear even when the mixture is stirred for a long period of time under heat, a homogeneous solution cannot be formed.

The heat-treatment of the swollen mixture may be carried out immediately after the swelling treatment. This is not absolutely necessary, and once the ultrahigh-molecular-weight polyethylene is swollen with the solvent, the mixture may be solidified by cooling to room temperature without the heat-treatment. Heat-treatment of the solidified mixture under the aforesaid conditions at some later time can give a uniform solution. It is not necessary therefore to perform the aforesaid swelling treatment again during the heat-treatment, and the swollen mixture may directly be heat-treated at a temperature above the DSC melting point of the swollen mixture.

The ultrahigh-molecular-weight polyethylene composition can also be produced by the second embodiment. second embodiment.

In the second embodiment, the mixture of the ultrahigh-molecular-weight polyethylene (A) and the organic sovlent (B) is subjected to a wetting treatment at a temperature of 70°C to less than the lowest swelling temperature of the mixture, for example at about 100°C, In the first embodiment, the mixture is subjected to a swelling treatment at a temperature equal to, or higher than, the lowest swelling temperature, whereas in the second embodiment, the mixture is subjected to a wetting treatment at a temperature below the lowest swelling temperature. Then, the wet mixture is hot-mixed with a fresh supply of the organic solvent (B) at a temperature of at least 130°C. The hot-mixing treatment may be carried out, for example, by simultaneously adding the wet mixture of the ultrahigh-molecular-weight polyethylene and a hot solvent heated at 130°C or higher to a vessel preheated to about 130 to 150°C and capable of supplying heat, and stirring the mixture, or by adding the solvent in the form of a superheated vapor at 140°C or above.

The ultrahigh-molecular-weight polyethylene (A) used in accordance with this invention may have incorporated therein various additives normally used for polyolefins, such as heat stabilizers, weatherability stabilizers, pigments, dyes, lubricants, gelling agents, and inorganic fillers.

The melting points of the ultrahigh-molecular-weight polyethylene (A) and the composition in accordance with this invention are measured by a differential scanning calorimeter (DSC) in accordance with ASTM D-3418.

The ultrahigh-molecular-weight polyethylene compositions do not have an extremely low temperature during melting as do ultrahigh-molecular-weight polyethylene compositions obtained by conventional methods nor an extremely high melt viscosity as a melt of the ultrahigh-molecular-weight polyethylene alone. Hence, it can be easily molded as is the case with a melt of general-purpose polyethylene by extrusion molding using a screw extruder, injection molding, blow molding, compression molding, etc.

The ultrahigh-molecular-weight polyethylene composition obtained by the swelling treatment in accordance with the process of this invention has good storage stability and good moldability. Filaments, tapes or films having high elasticity and tenacity can be obtained by extruding it into the form of filaments, tapes or films and stretching the product. These products can be used not only in the conventional fields of stretched yarns, tapes or stretched films, but also as reinforcing materials.

By subjecting the ultrahigh-molecular-weight polyethylene composition to a solvent removing treatment, there can be provided a crystalline solid of a ultrahigh-molecular-weight ethylene polymer or copolymer resin composed of the ethylene polymer or copolymer resin with an intrinsic viscosity $[\eta]$, determined at 135°C in decalin, of at least 5 dl/g, and having a lamellar microcrystalline structure with a thickness, determined by a small-angle X-ray scattering method, of 120-250 $\times 10^{-10}$ m (Å) and a crystallinity determined by an X-ray diffraction method, of at least 60%.

The thickness of the lamellar microcrystals in this invention is the long period measured by the small angle X-ray scattering method.

Isolation of the crystalline solid from the ultrahigh-molecular-weight polyethylene composition of the invention can be effected in any desired mode. Since, however, the purpose of obtaining the crystalline solid is to provide a material for fibers, films and other shaped articles, it is the usual practice to first mold the ultrahigh-molecular-weight polyethylene composition into a desired shape and then crystallize and precipitate the shaped article. Conditions for crystallization and precipitation scarcely affect the characteristics of the crystalline solid because as is the case with the crystallization of an ordinary polyethylene solution, the rate of crystallization after passage of a certain over-cooled condition is very high. Accordingly, in view of the working efficiency, the ultrahigh-molecular-weight polyethylene composition may be rapidly cooled. Removal of the solvent after molding can be carried out by various known methods such as solvent extraction and drying under reduced pressure. For some types of solvent, it can also be carried out by lyophilization.

Specifically, the removal of the solvent can be effected, for example, by a method which comprises immersing the ultrahigh-molecular-weight polyethylene composition in a large amount of a low-boiling solvent at room temperature or at an elevated temperature for 4 to 24 hours to substitute the low-boiling solvent for the solvent in the composition, and thereafter removing the low-boiling solvent under a reduced pressure of 200 mmHg or below. Examples of the low-boiling solvent are hydrocarbons such as pentane, hexane, heptane and benzene and chlorinated solvents such as chloroform and carbon tetrachloride.

If the solvent in the composition is decalin, it can be removed by treating the composition under a reduced pressure of 10 mmHg or below for at least 24 hours in a vacuum dryer heated at 80 to 100°C.

The crystalline solid isolated from the ultrahigh-molecular-weight polyethylene composition unlike a conventional ultrahigh-molecular-weight polyethylene melted and subsequently cooled, has a high crystallinity and excellent stretchability. It can be converted under quenching conditions into a crystalline solid having a spherulitic internal structure.

The following examples illustrate the present invention more specifically. It should be understood that the invention as claimed is not limited to these examples.

## Example 1

### Determination of the lowest swelling temperature

Ten grams of a powder of ultrahigh-molecular-weight polyethylene having an intrinsic viscosity [$\eta$] of 17 dl/g and a melting point of 134°C (Hizex MILLION® 240M, a product of Mitsui Petrochemical Industries Co., Ltd.) and 100 ml of decalin (boiling point 190°C) were mixed. In accordance with the method described hereinabove, the relation between the solvent contents and the treating temperatures was plotted in a graph as shown in Figure 1. The temperature corresponding to a solvent content of 70% was found to be 105°C. This temperature was defined as the lowest swelling temperature of the ultrahigh-molecular-weight polyethylene/decalin system.

### Production of a solution of the ultrahigh-molecular-weight polyethylene

Ten grams of the aforesaid ultrahigh-molecular-weight polyethylene and 100 ml of decalin were put in a glass beaker, and with stirring, the temperature of the mixture was raised to 110°C. At this temperature, the ultrahigh-molecular-weight polyethylene powder was swollen. When the condition of the mixture was continuously observed, it changed to a porridge-like viscous suspension after the lapse of,about 6 minutes at 110°C, and the swelling ended. Then, the mixture was heated to 160°C, and stirred. In about 5 minutes, a clear solution of the ultrahigh-molecular-weight polyethylene formed.

## Example 2

In Example 1, the amount of the ultrahigh-molecular-weight polyethylene was changed to 100 g, and the mixture was stirred at 120°C in the same way as in Example 1. When a period of about 5 minutes passed, decalin was impregnated in the ultrahigh-molecular-weight polyethylene and the mixture changed to a scrambled egg-like mixture, and the swelling was ended. The mixture was then heated to 160°C, and stirred. In about 3 minutes, a clear homogeneous solution of the ultrahigh-molecular-weight polyethylene was obtained.

## Comparative Example 1

Ten grams of the same ultrahigh-molecular-weight polyethylene as used in Example 1 and 100 ml of decalin were put into a glass vessel. With stirring, the mixture was rapidly heated to 160°C, and stirred at this temperature. Even after the lapse of 6 minutes from the reaching of the above temperature, a dilute solution having a lower concentration than a predetermined one and a molten mass of the polyethylene powder resulting from non-dissolution were seen to exist in the mixture. When the mixture was stirred further for 60 minutes, the molten mass of polyethylene was not dissolved, and the mixture did not become uniform.

The mixture was cooled and MFR and Tm were measured. MFR could not be measured because the separated decalin flowed out from the nozzle. Tm was 134°C (a main peak) and 100°C (subsidiary peak).

## Examples 3 and 4

One hundred grams of the same ultrahigh-molecular-weight polyethylene as used in Example 1 and 200 ml of decalin were put in a glass vessel. With stirring, the temperature of the mixture was raised to 110°C, and at this temperature, the ultrahigh-molecular-weight polyethylene powder was swollen. When the condition of the mixture was observed continuously, it changed to a scrambled egg-like mixture after the lapse of about 10 minutes at 110°C, and the swelling ended. Then, the mixture was cooled to room temperature, and about 5 mg of a sample was taken from it. The DSC melting point of the ultrahigh-molecular-weight polyethylene/de- calin mixture was found to be 112°C. Then, the sample was divided into two portions. One portion was rapidly heated to 160°C with stirring. In about 2 minutes after the above temperature was reached, this portion became a clear uniform solution. The other portion was rapidly heated to 135°C by the same method. Likewise, it changed to a clear uniform solution in about 10 minutes.

Evaluation of moldability

The melt flow rates of the solutions obtained in Examples 1 to 3 were measured in accordance with ASTM D1238 at a temperature of 160°C under a load of 20 kg in order to evaluate their flowability. The results were as follows:

| Example | MPR (g/10 min.) |
|---------|-----------------|
| 1 | 500 |
| 2 | 0.05 |
| 3 | 2 |

In view of the fact that the ultrahigh-molecular-weight of polyethylene alone has an MFR of $1 \times 10^{-5}$ g/10 min., it is seen that the solutions obtained in Examples 1 to 3 had good flowability.

Example 5

A ultrahigh-molecular-weight polyethylene solution having a polymer concentration of 10% by weight was prepared by using the same polyethylene as used in Example 1 in the same way as in Example 1. The solution was then spun by using a spinning die with a diameter of 1.0 mm at 130°C. The wet filament was passed through a vessel of acetone kept at 20°C, and cooled and solidified. The apparently gel-like wet filament cooled to a diameter of 1.8 mm was passed through a tubular oven heated at 120°C, and stretched at the ratios shown in Table 1 by a pair of godet rolls. The elasticity moduli and tenacities of the stretched filaments are shown in Table 1.

It is seen from the results that streched fibers having high elasticity and tenacity can be prepared from the composition of this invention.

## Table 1

| Properties of the stretched filaments | Stretch ratio | | |
|---|---|---|---|
| | 1:1 | 10:1 | 15:1 |
| Modulus of elasticity (GPa) | − | 10.5 | 24.3 |
| Tenacity (GPa) | 0.14 | 1.03 | 2.65 |

The moduli of elasticity and tenacities were measured at 23°C by an Instron universal tester (Model 1123 supplied by Instron Company). The length of a sample between clamps was adjusted to 100 mm, and the speed of pulling, to 100 mm/min. The elasticity of modulus was calculated by using a stress value at 2% strain. The cross-sectional area of the filament required for calculation was determined by using the weight and length of the filament and assuming the density of polyethylene to be 0.96 g/cm³

Example 6

Production of a ultrahigh-molecular-weight polyethylene solution:-

Twenty-five grams of the same ultrahigh-molecular-weight polyethylene as used in Example 1 and 90 g of decalin were put in a glass beaker. With stirring, the temperature of the mixture was raised to 110°C, and at this temperature, the ultrahigh-molecular-weight polyethylene was swollen. When the condition of the mixture was continuously observed, it changed to the form of scrambled egg after the lapse of about 6 minutes at 110°C. Then, the mixture was heated to 160°C and stirred. In about 5 minutes, a clear solution of the ultrahigh-molecular-weight polyethylene was obtained. The solution was cooled to room temperature. Samples were taken from it for measurement of MFR and Tm. It was found to be a uniform composition with a DSC melting point of 105°C (single peak) and an MFR of 85 g/10 min.

Examples 7 to 9

The procedure of Example 6 was repeated except that the amount of the ultrahigh-molecular-weight polyethylene was changed to 100 g, and the amount of decalin was changed to 90 g (Example 7), 180 g (Example 8) and 45 g (Example 9). The MFR and Tm nalues of the resulting compositions are tabulated in Table 2. Tm values were obtained as single peaks.

## Table 2

| Example | 7 | 8 | 9 |
|---|---|---|---|
| Concentration (wt.%) | 53 | 36 | 69 |
| MFR (g/10 min.) | 0.05 | 2 | 0.002 |
| Tm | 118 | 112 | 123 |

Example 10

Each of the uniform compositions obtained in examples 7 to 9 was press-formed at 160°C, and allowed to cool to room temperature. Decalin was removed at room temperature under reduced pressure to obtain a film-like crystalline solid. Its microstructure was examined as follows:-

Observation of the surface of the crystalline solid under a scanning electron microscope showed that basically the crystal units are of a lamellar structure having a thickness on the order of $100 \times 10^{-10}$m (Å) same as that which forms by recrystallization of a usual polyethylene solution. As the concentration of the polyethylene increased, there was a tendency toward smaller sizes of the lamellae and denser agglomeration of the lamellae. The characteristic of this lamellar structure was evidently different from the vague form of the surface of a sample obtained by direct melt-shaping from the starting powder without using a solvent. Tables 3 and 4 show the thickness (long period) of the lamella measured by the small-angle X-ray scattering method and the crystallinity measured by the X-ray diffraction method.

## Table 3

| Concentration (wt.%) | 1 | 22 | 36 | 53 | 69 | 100 |
|---|---|---|---|---|---|---|
| Thickness of the lamella $10^{-10}$m (Å) | 105 | 150 | 180 | 240 | 250 | * |

* Not observed

## Table 4

| Concentration (wt.%) | 1 | 22 | 36 | 53 | 69 | 100 |
|---|---|---|---|---|---|---|
| Crystallinity (%) | 74 | 67 | 65 | 63 | 62 | 49 |

Example 11

Test pieces, 5 x 50 mm, were cut out from the film-like crystalline solid obtained in Example 10, and the stretch ratio which caused the test pieces to break was measured under the following conditions.

Chuck distance: 20 mm

Stretching speed: 20 mm/min.

Stretching temperature: 120°C (air bath)

The results are shown in Table 5. It is seen from Table 5 that the test pieces had better stretchability than a test piece of the ultrahigh-molecular-weight polyethylene alone (concentration 100%).

## Table 5

| Concentration (wt.%) | 22 | 36 | 53 | 69 | 100 |
|---|---|---|---|---|---|
| Stretch ratio (X) | 15 | 11 | 9 | 8 | 6 |

Example 12

Decalin (25 g) was added at 100°C to 25 g of the same ultrahigh-molecular-weight polyethylene as used in Example 1 to prepare a swollen product of the polyethylene. The swollen product and 65 g of decalin heated at 190°C (boiling point) were simultaneously added to an enamelled beaker preheated to 150°C, and the mixture was gently stirred to form a clear solution of the ultrahigh-molecular-weight polyethylene. The solution was cooled to room temperature. The final product obtained was found to have an MFR of 85 g/10 min. and a Tm of 105°C (single peak).

**Claims**

1. A process for producing an ultrahigh-molecular-weight ethylene polymer or copolymer resin composition composed of (A) an ultrahigh-molecular-weight ethylene polymer or copolymer resin and (B) an organic solvent capable of dissolving the resin (A); characterized in that

(1) the resin composition is in the homogeneous state,

(2) the resin composition comprises

(A) more than 10% by weight to 75% by weight, based on the total weight of (A) and (B) of a ultrahigh-molecular-weight ethylene polymer or copolymer resin having an intrinsic viscosity [η], determined at 135°C in decalin, of at least 5 dl/g, and

(B) less than 90% by weight to 25% by weight, based on the total weight of (A) and (B), of an organic solvent capable of dissolving the resin (A), and

(3) the resin composition has a melt flow rate, MFR, determined by ASTM D1238 at 160°C under a load of 20 kg, of 1,000 to 0.001 g/10 min., a single DSC endothermic peak, and a DSC melting point, Tm (°C), determined by ASTM D3418, within a range specified by the following formulae (1) and (2)

$$Tm = Tmo - a(1 - x) \quad (1)$$

$$25 \leqq a \leqq 45 \quad (2)$$

wherein Tmo is the DSC melting point (°C) determined by ASTM D3418 of the resin (A), and x is the weight fraction of the resin (A) based on the total weight of (A) and (B), which process comprises

(1) subjecting a mixture of more than 10% by weight to 75% by weight of the resin (A) and less than

12

90% by weight to 25% by weight of the organic solvent (B), based on the total weight of (A) and (B), to a swelling treatment at a temperature ranging from the lowest swelling temperature (°C) to less than the DSC melting point (°C) determined by ASTM D3418, of the resin (A) until swelling is terminated, and

(2) heat-treating the swollen mixture at a temperature equal to, or higher than, the DSC melting point, determined by ASTM D3418 of the mixture.

2. A process for producing an ultrahigh-molecular-weight ethylene polymer or copolymer resin composition composed of (A) an ultrahigh-molecular-weight ethylene polymer or copolymer resin and (B) an organic solvent capable of dissolving the resin (A); characterized in that

(1) the resin composition is in the homogeneous state,

(2) the resin composition comprises

(A) more than 10% by weight to 75% by weight, based on the total weight of (A) and (B) of a ultrahigh-molecular-weight ethylene polymer or copolymer resin having an intrinsic viscosity [$\eta$], determined at 135°C in decalin, of at least 5 dl/g, and

(B) less than 90% by weight to 25% by weight, based on the total weight (A) and (B), of an organic solvent capable of dissolving the resin (A), and

(3) The resin composition has a melt flow rate, MFR, determined by ASTM D1238 at 160°C under a load of 20 kg, of 1,000 to 0.001 g/10 min., a single DSC endothermic peak, and a DSC melting point, Tm (°C), determined by SATM D3418, within a range specified by the following formulae (1) and (2)

$$Tm = Tmo - a(1 - x) \quad (1)$$
$$25 \leq a \leq 45 \quad (2)$$

wherein Tmo is the DSC melting point (°C) determined by ASTM D3418 of the resin (A), and x is the weight fraction of the resin (A) based on the total weight of (A) and (B), which process comprises

(1') subjecting the resin (A) to a wetting treatment with the organic solvent (B), the amount of the organic solvent (B) being sufficient to form a slurry of the resin (A), at a temperature of 70°C to less than the lowest swelling temperature (°C) of the mixture and

(2') hot-mixing the resulting slurry with a fresh supply of the organic solvent (B) at a temperature of at least 130°C to provide a mixture containing more than 10% by weight to 75% by weight of the resin (A) and less than 90% by weight to 25% by weight of the organic solvent (B), based on the total weight of (A) and (B).

3. A process according to claim 1 or 2 wherein the organic solvent (B) is an aliphatic hydrocarbon, aromatic hydrocarbon or its hydrogenated derivative or a halogenated hydrocarbon.

4. A process according to claim 1, 2 or 3 wherein the resin (A) is a copolymer of a major amount of ethylene and a minor amount of an alpha-olefin having 3 to 18 carbon atoms.

5. A process according to any one of claims 1 to 4 wherein the organic solvent (B) has a boiling point which is equal to, or higher than, the melting point of the resin (A).

6. A process according to any one of claims 1 to 5 wherein the amount of the resin (A) is more than 20% by weight to 60% by weight based on the total weight of (A) and (B) and the amount of the organic solvent (B) is less than 80% by weight to 40% by weight based on the total weight of (A) and (B).

7. A process according to any one of claims 1 to 6 wherein formula (2) is the following formula (2-1)

$$30 \leq a \leq 40 \quad (2 - 1)$$

8. A process according to any one of claims 1 to 7 wherein the melt flow rate of the composition is 300 to 0.001 g/10 min.

9. A process according to any one of the preceding claims in which the solvent is n-nonane, n-decane, n-undecane, n-dodecane, n-tetradecane, n-octadecane, liquid paraffin, kerosene, xylene, naphthalene, tetralin, decalin, butylbenzene, p-cymene, cyclohexylbenzene, diethylbenzene, pentylbenzene, dodecylbenzene, bicyclohexyldecalin, methylnaphthalene, ethylnaphthalene, 1,1,2,2-tetrachloroethane, pentachloroethane, hexachloroethane, 1,2,3,-trichloropropane, dichlorobenzene, 1,2,4-trichlorobenzene or bromobenzene.

10. A process for preparing a crystalline solid of an ultrahigh-molecular-weight ethylene polymer or copolymer composed of an ethylene polymer or copolymer resin having an intrinsic viscosity [η], determined at 135°C in decalin, of at least 5 dl/g and having a lamellar microcrystalline structure with a thickness, determined by a small angle, X-ray scattering method, of 12 to 25 nm (120 to 250 Å) and a crystallinity, determined by an X-ray diffraction method, of at least 60%; which process comprises removing the organic solvent (B) from a composition produced by a process according to any one of claims 1 to 9.

## Patentansprüche

1. Verfahren zur Herstellung einer Ethylen-Polymer- oder -Copolymer-Harzmasse mit ultrahohem Molekulargewicht, bestehend aus (A), einem Ethylen-Polymer- oder -Copolymer-Harz mit ultrahohem Molekulargewicht und (B) einem organischen Lösungsmittel, das imstande ist, das Harz (A) zu lösen, dadurch gekennzeichnet, daß

(1) die Harzmasse in homogener Form vorliegt,

(2) die Harzmasse umfaßt

(A) mehr als 10 Gew.-% bis 75 Gew.-%, bezogen auf das Gesamtgewicht von (A) und (B), eines Ethylen-Polymer- oder -Copolymer-Harzes mit ultrahohem Molekulargewicht und einer Intrinsik-Viskosität [η], bestimmt bei 135°C in Decalin von zumindest 5 dl/g, und

(B) weniger als 90 Gew.-% bis 25 Gew.-%, bezogen auf das Gesamtgewicht von (A) und (B), eines organischen Lösungsmittels, das imstande ist das Harz (A) zu lösen, und

(3) die Harzmasse eine Schmelzflußrate, MFR, bestimmt nach ASTM D1238 bei 160°C, unter einer Last von 20 kg, von 1000 bis 0,001 g/10 min, einen einzelnen endothermen DSC Peak und einem DSC-Schmelzpunkt Tm (°C), bestimmt nach ASTM D3418, besitzt innerhalb eines Bereiches, der durch die folgenden Gleichungen (1) und (2) angegeben wird:

$$Tm = Tmo - a(1 - x) \quad (1)$$
$$25 \leqq a \leqq 45 \quad (2),$$

wobei Tmo der DSC-Schmelzpunkt (°C) des Harzes (A), bestimmt nach ASTM D3418, ist und x der Gewichtsanteil des Harzes (A), bezogen auf das Gesamtgewicht von (A) und (B), wobei man

(1) ein Gemisch aus mehr als 10 Gew.-% bis 75 Gew.-% des Harzes (A) und weniger als 90 Gew.-% bis 25 Gew.-% des organischen Lösungsmittels (B), bezogen auf das Gesamtgewicht von (A) und (B), einer Quellbehandlung bei einer Temperatur im Bereich von der niedrigsten Quelltemperatur (°C) bis zu weniger als dem DSC-Schmelzpunkt (°C), bestimmt nach ASTM D3418, des Harzes (A) unterwirft, bis die Quellung beendet ist und

(2) das gequollene Gemisch bei einer Temperatur gleich oder höher als der DSC-Schmelzpunkt des Gemisches, bestimmt nach ASTM D3418, wärmebehandelt.

2. Verfahren zur Herstellung einer Ethylen-Polymer- oder -Copolymer-Harzmasse mit ultrahohem Molekulargewicht, bestehend aus (A), einem Ethylen-Polymer- oder -Copolymer-Harz mit ultrahohem Molekulargewicht und (B) einem organischen Lösungsmittel, das imstande ist, das Harz (A) zu lösen, dadurch gekennzeichnet, daß

(1) die Harzmasse in homogener Form vorliegt,

(2) die Harzmasse umfaßt

(A) mehr als 10 Gew.-% bis 75 Gew.-%, bezogen auf das Gesamtgewicht von (A) und (B), eines Ethylen-Polymer- oder -Copolymer-Harzes mit ultrahohem Molekulargewicht und einer Intrinsik-Viskosität [η], bestimmt bei 135°C in Decalin von zumindest 5 dl/g, und

(B) weniger als 90 Gew.-% bis 25 Gew.-%, bezogen auf das Gesamtgewicht von (A) und (B), eines organischen Lösungsmittels, das imstande ist das Harz (A) zu lösen, und

(3) die Harzmasse eine Schmelzflußrate, MFR, bestimmt nach ASTM D1238 bei 160°C, unter einer Last von 20 kg, von 1000 bis 0,001 g/10 min, einen einzelnen endothermen DSC Peak und einem DSC-Schmelzpunkt Tm (°C), bestimmt nach ASTM D3418, besitzt innerhalb eines Bereiches, der durch die folgenden Gleichungen (1) und (2) angegeben wird:

$$Tm = Tmo - a(1 - x) \quad (1)$$
$$25 \leqq a \leqq 45 \quad (2),$$

wobei Tmo der DSC-Schmelzpunkt (°C) des Harzes (A), bestimmt nach ASTM D3418, ist und x der Gewichtsanteil des Harzes (A), bezogen auf das Gesamtgewicht von (A) und (B), wobei man

(1') das Harz (A) einer Benetzungsbehandlung mit dem organischen Lösungsmittel (B) unterwirft, wobei die Menge an organischem Lösungsmittel (B) ausreichend ist, um eine Aufschlämmung des Harzes (A) zu bilden, bei einer Temperatur von 70°C bis zu weniger als der niedrigsten Quelltemperatur (°C) des Gemisches, und

(2') die erhaltene Aufschlämmung mit einer frisch zugeführten Menge des organischen Lösungsmittels (B) heiß vermischt bei einer Temperatur von mindestens 130°C, um ein Gemisch zu erhalten, das mehr als 10 Gew.-% bis zu 75 Gew.-% Harz (A) und weniger als 90 Gew.-% bis zu 25 Gew.-% organisches Lösungsmittel (B), bezogen auf das Gesamtgewicht von (A) und (B), erhält.

3. Verfahren nach Anspruch 1 oder 2, wobei das organische Lösungsmittel (B) ein aliphatischer Kohlenwasserstoff, aromatischer Kohlenwasserstoff oder ein hydriertes Derivat davon oder ein halogenierte Kohlenwasserstoff ist.

4. Verfahren nach Anspruch 1, 2 oder 3, wobei das Harz (A) ein Copolymer ist, mit einem größeren Anteil Ethylen und einem kleineren Anteil eines $\alpha$-Olefins mit 3 bis 18 Kohlenstoffatomen.

5. Verfahren nach einem der Ansprüche 1 bis 4, wobei das organische Lösungsmittel (B) einen Siedepunkt besitzt, der gleich oder ho-her ist als der Schmelzpunkt des Harzes (A).

6. Verfahren nach einem der Ansprüche 1 bis 5, wobei die Menge an Harz (A) mehr als 20 Gew.-% bis 60 Gew.-% beträgt, bezogen auf das Gesamtgewicht von (A) und (B), und die Menge an organischem Lösungsmittel (B) weniger als 80 Gew.-% bis 40 Gew.-%, bezogen auf das Gesamtgewicht von (A) und (B), ausmacht.

7. Verfahren nach einem der Ansprüche 1 bis 6, wobei die Formel (2) die folgende Formel (2-1) ist:
$$30 \leqq a \leqq 40 \quad (2 - 1).$$

8. Verfahren nach einem der Ansprüche 1 bis 7, wobei die Schmelzflußrate 300 bis 0,001 g/10 min beträgt.

9. Verfahren nach einem der vorangehenden Ansprüche, wobei das Lösungsmittel n-Nonan, n-Decan, n-Undecan, n-Dodecan, n-Tetradecan, n-Octadecan, flüssiges Paraffin, Kerosin, Xylol, Naphthalin, Tetralin, Decalin, Butylbenzol, p-Cymol, Cyclohexylbenzol, Diethylbenzol, Pentylbenzol, Dodecylbenzol, Bicyclohexyldecalin, Methylnaphthalin, Ethylnaphthalin, 1,1,2,2-Tetrachlorethan, Pentachlorethan, Hexachlorethan, 1,2,3-Trichlorpropan, Dichlorbenzol, 1,2,4-Trichlorbenzol oder Brombenzol ist.

10. Verfahren zur Herstellung eines kristallinen Feststoffs aus einem Ethylenpolymer oder -Copolymer mit ultrahohem Molekulargewicht, bestehend aus einem Ethylenpolymer oder -Copolymerharz mit einer Intrinsik-Viskosität [$\eta$], bestimmt bei 135°C in Decalin von zumindest 5 dl/g mit einer lamellaren mikrokristallinen Struktur mit einer Dicke, bestimmt durch Engwinkel-Röntgenstreuung von 12 bis 25 nm (120 bis 150 Å) und einer Kristallinität, bestimmt durch Röntgenbeugung von mindestens 60 %, wobei das Verfahren umfaßt die Entfernung des organischen Lösungsmittels (B) aus einer Masse, hergestellt nach einem Verfahren nach einem der Ansprüche 1 bis 9.

**Revendications**

1. Procédé de production d'une composition de résine de copolymère ou de polymère d'éthylène, de poids moléculaire très élevé, constituée de (A) une résine de copolymère ou de polymère d'éthylène, de poids moléculaire très élevé, et (B) d'un solvant organique capable de dissoudre la résine (A) ;
   **caractérisé** en ce que
   (1) la composition de résine est à l'état homogène,
   (2) la composition de résine comprend :
   (A) de plus de 10 % en poids de 75 % en poids, par rapport au poids total de (A) et (B), d'une résine de copolymère ou de polymère d'éthylène, de poids moléculaire très élevé, ayant une viscosité intrinsèque ($\eta$), déterminée à 135°C dans la Décaline, d'au moins 5 cl/g, et (B) de moins de 90 % en poids à 25 % en poids, par rapport au poids total de (A) et
   (B), d'un solvant organique capable de dissoudre la résine (A), et
   (3) la composition de résine a une vitesse d'écoulement à l'état fondu, VEF, déterminée selon ASTM D 1238, à 160°C sous une charge de 20 kg, de 1000 à 0,001 g/10 min, un pic endothermique unique par ACD (Analyse Calorimétrique Différentielle), et un point de fusion par ACD, Tm (°C), déterminé selon ASTM D 3418, dans un intervalle défini par les formules (1) et (2) suivantes :
   $$Tm \simeq Tmo - a(1 - x) \quad (1)$$

$$25 \leqq a \leqq 45 \quad (2)$$

dans lesquelles Tmo est le point de fusion (°C) par ACD, de la résine (A), déterminé selon ASTM D 3418, et x est la fraction pondérale de la résine (A) par rapport au poids total de (A) et (B),

ledit procédé comprenant les étapes consistant à :

(1) soumettre un mélange de plus de 10 % en poids à 75 % en poids de la résine (A) et de moins de 90 % en poids à 25 % en poids du solvant organique (B), par rapport au poids total de (A) et (B), à un traitement de gonflement à une température allant de la plus basse température (°C) de gonflement à une température inférieure au point de fusion (°C) par ACD, déterminé selon ASTM D 3418, de la résine (A), jusqu'à ce que le gonflement soit terminé, et

(2) traiter thermiquement le mélange gonflé, à une température égale ou supérieure au point de fusion par ACD, déterminé selon ASTM D 3418, du mélange.

**2.** Procédé de production d'une composition de résine de copolymère ou de polymère d'éthylène, de poids moléculaire très élevé, constituée de (A) une résine de copolymère ou de polymère d'éthylène, de poids moléculaire très élevé, et (B) d'un solvant organique capable de dissoudre la résine (A) ;

**caractérisé** en ce que

(1) la composition de résine est à l'état homogène,

(2) la composition de résine comprend :

(A) de plus de 10 % en poids à 75 % en poids, par rapport au poids total de (A) et (B), d'une résine de copolymère ou de polymère d'éthylène, de poids moléculaire très élevé, ayant une viscosité intrinsèque ($\eta$), déterminée à 135°C dans la Décaline, d'au moins 5 cl/g, et (B) de moins de 90 % en poids à 25 % en poids, par rapport au poids total de (A) et (B), d'un solvant organique capable de dissoudre la résine (A), et

(3) la composition de résine a une vitesse d'écoulement à l'état fondu, VEF, déterminée selon ASTM D 1238, à 160°C sous une charge de 20 kg, de 1000 à 0,001 g/10 min, un pic endothermique unique par ACD (Analyse Calorimétrique Différentielle), et un point de fusion par ACD, Tm (°C), déterminé selon ASTM D 3418, dans un intervalle défini par les formules (1) et (2) suivantes :

$$Tm \simeq Tmo - a(1 - x) \quad (1)$$
$$25 \leqq a \leqq 45 \quad (2)$$

dans lesquelles Tmo est le point de fusion (°C) par ACD, de la résine (A), déterminé selon ASTM D 3418, et x est la fraction pondérale de la résine (A) par rapport au poids total de (A) et (B),

ledit procédé comprenant les étapes consistant à :

(1') soumettre la résine (A) à un traitement mouillant avec le solvant organique (B), la quantité du solvant organique (B) étant suffisante pour former une suspension de la résine (A), à une température allant de 70°C à moins que la plus basse température (°C) de gonflement du mélange, et

(2') mélanger à chaud la suspension résultante avec un apport nouveau du solvant organique (B), à une température d'au moins 130°C, pour fournir un mélange contenant de plus de 10 % en poids à 75 % en poids de la résine (A) et de moins de 90 % en poids à 25 % en poids du solvant organique (B), par rapport au poids total de (A) et (B).

**3.** Procédé selon la revendication 1 ou 2, dans lequel le solvant organique (B) est un hydrocarbure aliphatique, un hydrocarbure aromatique ou son dérivé hydrogéné, ou un hydrocarbure halogéné.

**4.** Procédé selon la revendication 1, 2 ou 3, dans lequel la résine (A) est un copolymère d'une quantité importante d'éthylène et d'une quantité moindre d'une alpha-oléfine ayant de 3 à 18 atomes de carbone.

**5.** Procédé selon l'une quelconque des revendications 1 à 4, dans lequel le solvant organique (B) a un point d'ébullition qui est égal ou supérieur au point de fusion de la résine (A).

**6.** Procédé selon l'une quelconque des revendications 1 à 5, dans lequel la quantité de la résine (A) est de plus de 20 % en poids à 60 % en poids, par rapport au poids total de (A) et (B), et la quantité du solvant organique (B) est de moins de 80 % en poids à 40 % en poids, par rapport au poids total de (A) et (B).

**7.** Procédé selon l'une quelconque des revendications 1 à 6, dans lequel la formule (2) est la formule (2-1) suivante :

$$30 \leqq a \leqq 40 \quad (2 - 1)$$

**8.** Procédé selon l'une quelconque des revendications 1 à 7, dans lequel la vitesse d'écoulement à l'état fondu de la composition est de 300 à 0,001 g/10 min.

9. Procédé selon l'une quelconque des revendications précédentes dans lequel le solvant est le n-nonane, le n-décane, le n-undécane, le n-dodécane, le n-tétradécane, le n-octadécane, une paraffine liquide, le kérosène, le xylène, le naphtalène, la tétraline, la décaline, le butylbenzène, le p-cymène, le cyclo-hexyl-benzène, le diéthylbenzène, le pentylbenzène, le dodécylbenzène, la bicyclohexyldécaline, le méthyl-naphtalène, l'éthylnaphtalène, le 1,1,2,2-tétrachloroéthane, le pentachloroéthane, l'hexachloroéthane, le 1,2,3-trichloropropane, le dichlorobenzène, le 1,2,4-trichlorobenzène ou le bromobenzène.

10. Procédé de préparation d'un solide cristallin d'un copolymère ou d'un polymère d'éthylène, de poids moléculaire très élevé, constitué d'une résine de copolymère ou de polymère d'éthylène, ayant une viscosité intrinsèque ($\eta$), déterminée à 135°C dans la Décaline, d'au moins 5 dl/g et ayant une structure microcristalline lamellaire avec une épaisseur, déterminée selon une méthode de diffusion aux petits angles des rayons X, de 12 à 25 nm (120 à 250 Å) et une cristallinité, déterminée selon une méthode de diffraction des rayons X, d'au moins 60 %, procédé qui comprend l'élimination du solvant organique (B) d'une composition produite par un procédé selon l'une quelconque des revendications 1 à 9.